# EUROPEAN PATENT APPLICATION

(11) **EP 1 199 852 A1**
(43) Date of publication of application: **24.04.2002**
(21) Application number: 01932298.1
(22) Date of filing: 28.05.2001
(51) Int. Cl.: H04L 12/56

(54) **METHOD FOR CALCULATING COMMUNICATION CHARGE, APPARATUS FOR CALCULATING COMMUNICATION CHARGE AND METHOD FOR CHARGING COMMUNICATION**

(30) Priority: 26.05.2000 JP 2000157100
(71) Applicant: Sony Corporation, Tokyo 141-0001 (JP)
(72) Inventor: TADANO, Hiroshi, Shinagawa-ku Tokyo 141-0001 (JP); HASHIZUME, Naoyoshi, Shinagawa-ku Tokyo 141-0001 (JP); KOBAYASHI, Masanori, Shinagawa-ku Tokyo 141-0001 (JP); MORIYUKI, Yasuhiro, Shinagawa-ku Tokyo 141-0001 (JP); NAKASHIMA, Hirofumi, Shinagawa-ku Tokyo 141-0001 (JP)
(74) Representative: Pratt, Richard Wilson
(86) International application number: JP0104458
(87) International publication number: WO0191388

(57) **Abstract**

In the present invention, an IP address of a communication party is detected by analysing flow information of communication carried out by the user, and in case the IP address of the communication party is an IP address registered in advance by the user, the communication charge appropriate to the communication carried out by the user is calculated in the discount charge form.

Further, in case the communication party is a communication party registered in a group of the user, the communication charge carried out by the user is calculated using the discount charge form different from the standard communication charge.

In the present invention, the meter-rate billing process is not carried out uniformly with respect to the user merely appropriately to an amount of communication data of the user but the discount charge form for discounting the communication charge appropriately to an amount of communication of the user with respect to the communication party is applied whereby billing in the charge form which is individual every user can be carried out. Further, such a discount process as described is carried out appropriately to the communication party whereby various billing services rich in flexibility can be provided.

## Description

### Technical Field

The present invention relates to a communication charge calculation method, a communication charge calculation apparatus and a communication charge billing method suitably applied, for example, to an internet connection service system providing a connection service to the internet. Particularly, the present invention relates to a communication charge calculation method, a communication charge calculation apparatus and a communication charge billing method, most suitable for, when a user uses the internet connection service system to perform communication with the communication party, calculating the communication charge appropriate to an amount of communication of the user.

### Background Art

In the past, main methods for connecting internet communication equipment such as a personal computer to the internet include two methods, a dial-up IP (Internet Protocol) connection and an exclusive-use circuit IP constant connection. The dial-up IP connection is a method for dialling up a communication service provider (a provider) providing the internet connection service to temporarily borrow an IP address, and using the IP address to connect the own internet communication equipment to the internet, the method being used for an individual user mainly.

On the other hand, the exclusive-use circuit IP constant connection is a method used mainly by enterprises for constantly connecting the internet communication equipment to an IP network owned by the provider via the exclusive-use circuit, and using a proper and fixed IP address given by the provider to connect the internet communication equipment to the internet via the IP network.

In recent years, for realizing the B to B business, there has been increased enterprises making use of the internet for communication between enterprises, communication between business offices, and communication between affiliated companies, and with this increase, the number of contracts for the exclusive-use circuit IP constant connection in the provider has been also increased. Further, in recent years, individuals who conclude a contract for the exclusive-use circuit IP constant connection have been also increased due to the lower price of network equipment such as an access circuit, a router or the like.

Incidentally, billing forms with respect to the exclusive-use circuit IP constant connection include a fixed charge form for paying a fixed charge to a provider irrespective of a usage degree of the internet connection service, and a so-called meter-rate charge form for paying the charge appropriate to the usage degree of the internet connection service.

The meter-rate charge form is a form of measuring an amount of arrival and departure traffic (an amount of arrival and departure communications) of a user who concludes a billing contract of the meter-rate charge form, and bill the user for the charge appropriate to the measured result on its user. In the meter-rate charge form as just mentioned, there is a provider or the like for carrying out a service which discounts the communication charge for a user who concludes contracts of not only a single circuit but a plurality of circuits.

However, the aforementioned discount service merely discounts a fixed amount appropriately to the number of communication circuits under contract irrespective of with whom communication was done, and irrespective of an amount of communication data of a user. That is, the discount amount applied to the user was the same irrespective of with whom a communication was done, and was the same evening if the amount of communication data was large or small.

Particularly, in recent years, examples of making use of the internet in communication between enterprises are increasing rapidly. In such a case as described, most of the communications done by an enterprise are those done with the own client's enterprise and the affiliated enterprise, and most of the traffic data amounts of communications done via the internet are occupied by data amounts generated by the communication with the client's enterprise and the communication with the affiliated enterprise.

In case a user communicates with the unspecific communication party when receiving such an internet connection service as described under these circumstances, communication may be carried out in the standard charge form, but in case a user communicates with the specific communication party (for example, the aforementioned client's enterprise or affiliated enterprise), there is a demand that the user wishes to carry out communication in the discount charge form which is lower in price than the standard charge.

### Disclosure of the Invention

It is an object of the present invention to provide a billing service which is different at each user, by applying a most suitable communication charge calculation method which is different in discount amount appropriate to an amount of communication carried out by a user and the communication party.

It is another object of the present invention to provide a charge calculation method which is rich in flexibility that has not been present heretofore, by varying the communication discount form appropriately to communication of a user.

It is still another object of the present invention to provide a service of delicate sense with respect to a user, by applying the communication charge calculation method according to the present invention, and to enhance service.

For solving difficulties of the type previously described, the communication charge calculation method according to the present invention comprises: a first step for storing a first table having addresses on the network of users stored therein, and a second table having addresses of users of specific communication parties at each user designated in advance stored therein; a second step for detecting, at a communication unit, addresses of users of the sending source and the sending party of data transmitted via a network; and a third step for judging if the communication party is designated as a user of the specific communication party, with respect to users of the sending source and the sending party of data at each communication unit, on the basis of the detected results in the first and second tables stored in the first step and the second step, and in case the communication party is not the user of the specific communication party, calculating the meter-rate charge with respect to the data in a first charge form, whereas in case the communication party is the user of the specific communication party, calculating the meter-rate charge with respect to the data in a second charge form.

The communication charge calculation method according to the present invention further comprises: a first step for tabulating and storing an address on the network at each user belonging to a group registered in advance; a second step for detecting, at a unit, addresses of users of the sending source and the sending party of data transmitted via the network; and a third step for judging if addresses of the sending source and the sending party of data belong to one and the same group at a unit on the basis of the detected result in the second step and the table, and in case of belonging to one and the same group, calculating the meter-rate charge with respect to the data in a first charge form, whereas in case of not belonging to one and the same group, calculating the meter-rate charge with respect to the data in a second charge form.

Further, the communication charge calculation apparatus according to the present invention comprises detection means for detecting an IP address of a communication party by analysing flow information of communication carried out by a user; and calculation means for calculating the communication charge appropriate to communication carried out by a user in the discount charge form which discounts the standard charge form in case the IP address of the communication party is an IP address registered in advance by a user.

Furthermore, the communication charge calculation apparatus according to the present invention comprises detection means for detecting an IP address of a communication party by analysing flow information of communication carried out by a user; and calculation means for calculating the communication charge carried out by a user, using the discount charge form different from the standard communication charge, in case the communication party is a communication party registered in a group.

Furthermore, the communication charge calculation method according to the present invention comprises a detection step for detecting an IP address of a communication party by analysing flow information of communication carried out by a user; and a calculation step for controlling the charge form of communication charge with respect to communication carried out by a user appropriately to an IP address of a communication party.

Furthermore, the communication charge calculation method according to the present invention comprises a detection step for detecting an IP address of a communication party by analysing flow information of communication carried out by a user; and a calculation step for controlling the discount rate of the communication charge with respect to communication carried out by a user appropriately to an IP address of a communication party.

Furthermore, the communication charge calculation method according to the present invention comprises a detection step for detecting an IP address of a communication party by analysing flow information of communication carried out by a user; a calculation step for calculating the communication charge carried out by a user by employing a meter-rate charge calculation method different from the standard charge appropriately to an IP address of a communication party; and a billing step for billing the communication charge calculated by the calculation step on a user.

Furthermore, the communication charge calculation method according to the present invention comprises a detection step for detecting an IP address of a communication party by analysing flow information of communication carried out by a user; and a calculation step for controlling the discount rate of the communication charge with respect to communication carried out by a user, in case the IP address of a communication party is an IP address registered in advance by a user.

Furthermore, the communication charge calculation method according to the present invention comprises a detection step for detecting an IP address of a communication party by analysing flow information of communication carried out by a user; and a calculation step for calculating the communication of a user, by employing a meter-rate charge calculation method different from the standard communication charge, in case the IP address of a communication party is an IP address registered in advance by a user.

Furthermore, the communication charge calculation method according to the present invention comprises a detection step for detecting an IP address of a communication party by analysing flow information of communication carried out by a user; and a calculation step for calculating the communication charge carried out by a user by employing a meter-rate charge calculation method in which the communication charge applied is different from the standard charge, in case the communication party is determined to be a communication party registered in advance by a user, referring to the detected IP address, whereas calculating the communication charge carried out by a user by employing a meter-rate charge calculation method appropriate to the standard charge, in case the communication party is determined not to be a communication party registered in advance by a user, referring to the detected IP address; and a billing step for billing the communication charge calculated by the calculation step on a user.

Furthermore, the communication charge calculation method according to the present invention comprises a detection step for detecting an IP address of a communication party by analysing flow information of communication carried out by a user; and a calculation step for controlling the discount rate of communication charge with respect to communication carried out by a user, in case the IP address of a communication party is included in a group in which an IP address of a user is registered, and in case the IP address of a communication party is an IP address registered in advance by a user.

Furthermore, the communication charge calculation method according to the present invention is a communication charge billing method for billing the charge appropriate to communication carried out by a user on the user when a user carries out communication with a communication party via a network, the method comprising: a detection step for detecting an IP address of a communication party by analysing flow information of communication carried out by a user; a calculation step for calculating the communication charge carried out by a user by using the discount charge form different from the standard charge, in case the communication party is a communication party registered in a group of a user, referring to the detected IP address, whereas calculating the communication charge carried out by a user by using the charge form to be the standard charge, in case the communication party is a communication party not registered in a group of a user, referring to the detected IP address; and a billing step for billing the communication charge calculated by the calculation step on a user.

Furthermore, the communication charge calculation method according to the present invention comprises a detection step for detecting an IP address of a communication party by analysing flow information of communication carried out by a user; and a calculation step for calculating the communication charge carried out by a user by using a first discount charge form and a second discount charge form different from the standard communication charge, in case the communication party is a communication party registered in advance by a user and the communication party is a communication party registered in a group of a user.

Furthermore, the communication charge calculation method according to the present invention is a communication charge billing method for billing the charge appropriate to communication carried out by a user on the user when a user carries out communication with a communication party via a network, the method comprising: a detection step for detecting an IP address of a communication party by analysing flow information of communication carried out by a user; a calculation step for calculating the communication charge carried out by a user by using a first discount charge form and a second discount form different from the standard charge, in case the communication party is a communication party registered in advance by a user and the communication party is determined to be a communication party registered in a group of a user, referring to the detected IP address, whereas calculating the communication charge carried out by a user by using the first discount charge form and the second discount charge form different from the standard charge, in case the communication party is not a communication party registered in advance by a user and the communication party is determined not to be a communication party registered in a group of a user, referring to the detected IP address.

Other objects, features and advantages of the present invention will become apparent from the following detailed description in conjunction with the embodiments of the present invention described later and the accompanying drawings.

### Brief Description of the Drawings

FIG. 1 is a block diagram showing constitution of an internet connection service system to which a communication charge calculation method in the present embodiment is applied.
FIG. 2 is a view showing flow information appropriate to communication of a user.
FIG. 3 is a view showing an IP address table.
FIG. 4 is a view showing a discount object party table.
FIG. 5 is a block diagram showing constitution of a meter-rate charge calculation apparatus.
FIG. 6 is a flow chart showing a first meter-rate charge calculation process procedure.
FIG. 7 is a block diagram showing another embodiment of the meter-rate charge calculation apparatus.
FIG. 8 is a view showing another embodiment of the discount object party table.
FIG. 9 is a view showing a grouping table.
FIG. 10 is a flow chart showing a second meter-rate charge calculation process procedure.
FIG. 11 is a flow chart showing a third meter-rate charge calculation process procedure.
FIG. 12 is a block diagram showing a detailed constitution of a meter-rate charge calculation apparatus.
FIG. 13 is a view showing an example of a classification table.
FIG. 14 is a view conceptually showing hierarchical construction of demand items defined by a classification table.
FIG. 15 is a view showing an example of description of a statement of demand in case designation of an output level is "4".
FIG. 16 is a view showing an example of description of a statement of demand in case designation of an output level is "2".

### Best Mode for Carrying out the Invention

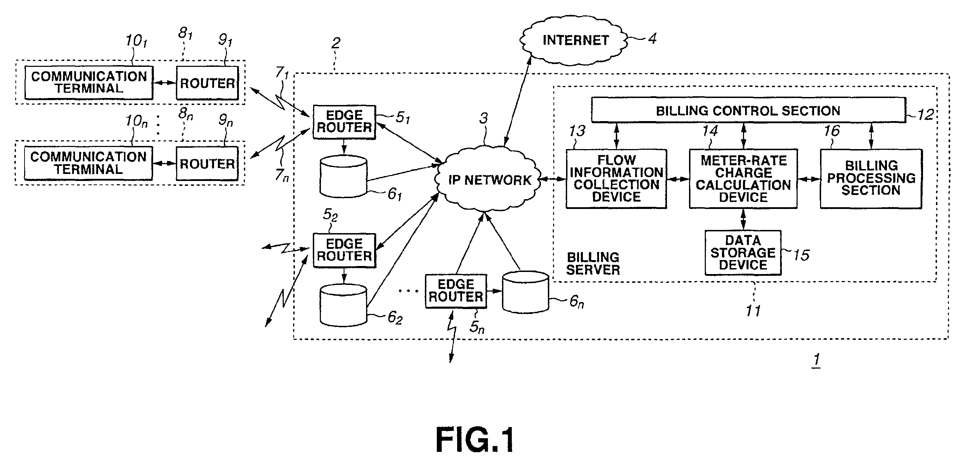

Referring to FIG. 1, constitution of an internet connection service system 1 to which a communication charge calculation method of the present invention is applied is explained. In FIG. 1, reference numeral 1 designates an internet connection service system according to the present embodiment as a whole, and an IP network 3 owned by an internet connection provider 2 is connected with an internet 4 through an exclusive-use circuit of an optical communication cable or the like that can be communicated in large capacity.

A plurality of edge routers 5 are connected to the IP network 3, and routers 9₁ ∼ 9ₙ of users 8₁ ∼ 8ₙ given with a proper and fixed IP address by concluding a contract of exclusive-use circuit IP constant connection with the respective providers 2 are connected with the routers 5 through wire, such as optical communication cables, or wireless, such as WLL (Wireless Local Loop), exclusive-use circuits 7₁ ∼ 7ₙ. In this embodiment, the user 8 supposes enterprise which concluded a constant connection service contract with the provider 2 for operating the internet connection service system 1. Further, internet communication terminals 10₁ ∼ 10ₙ of personal computers or the like are connected with the routers 9₁ ∼ 9ₙ through communication circuits, for example, such as an interoffice LAN (Local Area Network) of the respective users 8₁ ∼ 8ₙ.

Thereby, in the internet connection service system 1, the users 8₁ ∼ 8ₙ connect the communication terminals 10₁ ∼ 10ₙ with the internet 4 through the routers 9₁ ∼ 9ₙ, the exclusive-use circuits 9₁ ∼ 9ₙ, the edge routers 5₁ ∼ 5ₙ, and the IP network 3 in order, using the IP address given from the provider 2, so as to enable to use them.

When the users 8₁ ∼ 8ₙ carry out communication through the edge routers 5₁ ∼ 5ₙ, and the IP network 3, data flow over the edge routers 5₁ ∼ 5ₙ in the bidirection. In the field of the communication technology, a stream of data which flows between two end terminals by communication carried out between two end terminals (for example, between the server on the communication service provider side and the computer on the user side) through the network is called "flow ". Further, flow information is information representative of a stream of data flown by the communication, which is information including, for example, such as an IP address of an end terminal at which communication is carried out, or the number of packets of a stream flown by communication, and so on.

When the users 8₁ ∼ 8ₙ carry out data communication, the edge routers 5₁ ∼ 5ₙ detect, at that time, an IP address of the sending source and an IP address of the sending party on the basis of header data of the flow resulting from the communication, and detect the number of passage bites of the flow.

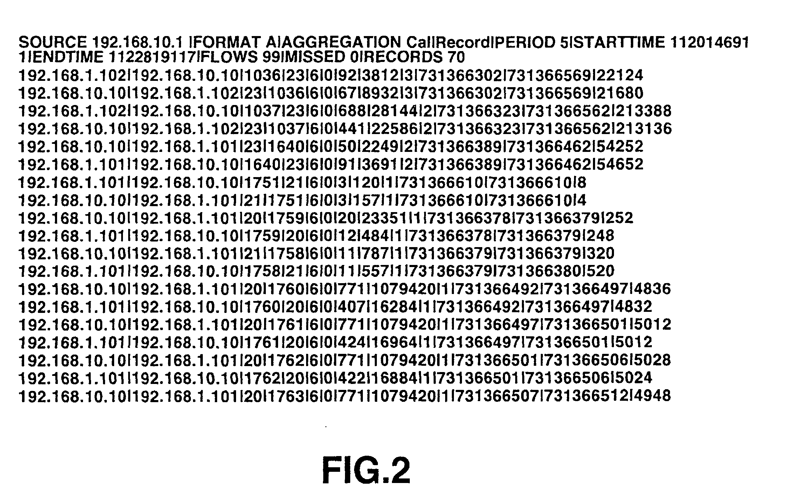

Then, the edge routers 5₁ ∼ 5ₙ put the information obtained as above (hereinafter called flow information in the lump) in order with respect to a plurality of flows into a file of format, for example, as shown in FIG. 2, which is supplied to flow information storage devices 6₁ ∼ 6ₙ connected with the edge routers 5₁ ∼ 5ₙ. The flow information storage device 6 stores the received flow information and reads the flow information being stored in accordance with a request of the edge router 5 or a request of a billing server 11 described later.

FIG. 2 shows an example of the flow information. The first two lines represent headers, and succeeding lines represent flow information of respective flow. In case of this example, as flow information described above, there are stored information with respect to "IP address of sending source", " IP address of sending party", "Port number of sending source ", "Port number of sending party", "Protocol type TCP or the like", "Type of Service (TOS)", "Packet number ", "Bite number ", "Flow number ", "Time stamp of first packet ", "Time stamp of last packet ", and "Time required for passage of flow " in said order.

The provider 2 for providing an IP network is provided with a billing server 11 for carrying out network connection and billing process. The billing server 11 comprises a billing control section 12 for controlling all blocks in the billing server 11, a flow information collection device 13 for collecting flow information, a meter-rate charge calculation device 14 for calculating meter-rate charge, a data storage device 15 provided with various tables used for meter-rate billing, and a billing processing section 16 for carrying out billing process of total.

The flow information collection device 13 reads flow information respectively stored in the flow information storage devices 6₁ ∼ 6ₙ when the meter-rate charge calculation process takes place to collect them through the IP network 3. The meter-rate charge calculation device 14 calculates the meter-rate charge on the basis of these flow information accumulated in the flow information collection device 13. For example, in case of calculating the communication usage charge for a month of a user, flow information indicative of a flow generated on the basis of the communication carried out by the user is received from the flow information storage device 6 through the flow information collection device 13, and the flow information is analysed to thereby calculate the communication charge for a month.

In the communication charge calculation method according to the present embodiment, the meter-rate charge calculation device 14 refers, when the meter-rate charge for each flow is calculated, to table information stored and held in the data storage device 15 comprising a hard disk device or the like, to enable to carry out various meter-rate charge calculation processes. More specifically, the meter-rate charge calculation device 14 is able to carry out a first meter-rate charge calculation process capable of being benefited by discount with respect to the normal communication charge, in case a user carries out communication with a communication party designated in advance; a second meter-rate charge calculation process capable of being benefited by discount more than the normal communication charge, in case communication is carried out in a group constituted by a plurality of users; and a third meter-rate charge calculation process for carrying out a discount for a combination of both the first meter-rate charge calculation process and the second mete-rate calculation process.

In the following, the first meter-rate charge calculation process, the second meter-rate charge calculation process, and the third meter-rate charge calculation process will be explained in order.

First, the first meter-rate charge calculation process benefited by discount in case a user carries out communication with a communication party designated in advance will be explained hereinafter.

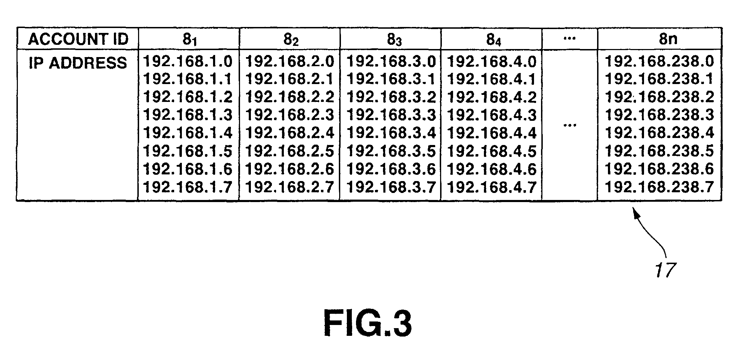

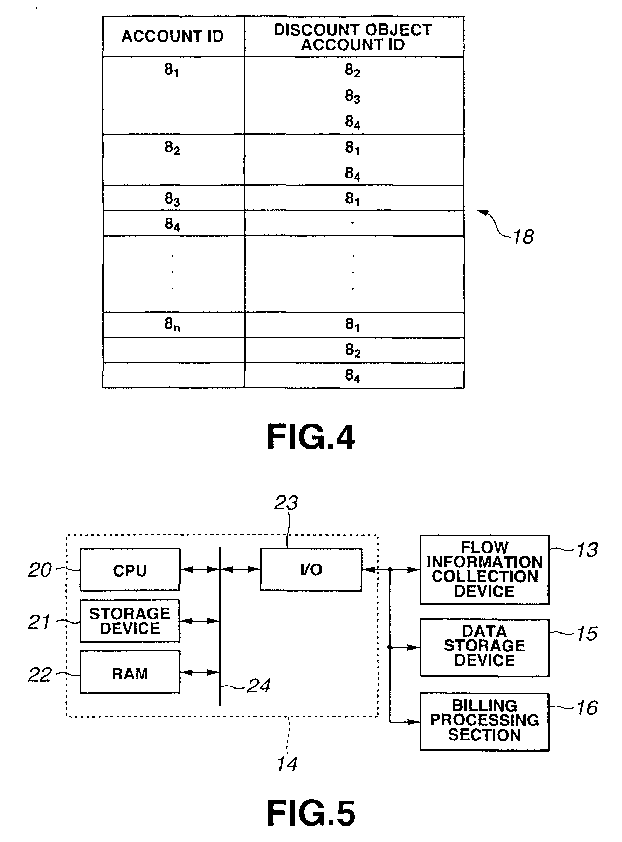

In case the first meter-rate charge calculation process is carried out, at least an IP address table 17 shown in FIG. 3 and a discount object party table 18 shown in FIG. 4 should be stored in the data storage device 15.

The IP address table 17 is a table in which fixed IP addresses given to the users 8₁ ∼ 8ₙ are made to be corresponding to user's accounts ID of the users 8₁ ∼ 8ₙ, as shown in FIG. 3. While normally, a plurality of fixed IP addresses are given to the users 8₁ ∼ 8ₙ in the exclusive-use circuit IP constant connection, it is noted that in the example, eight (8) IP addresses are given to the users 8₁ ∼ 8ₙ.

In the internet connection service system 1, the users 8₁ ∼ 8ₙ are able to designate other users 8₁ ∼ 8ₙ as communication parties for discount object of the meter-rate charge (hereinafter called the discount object parties). The discount object party table 18 is a table in which the IP addresses of the discount object parties are corresponding at each of designated users 8₁ ∼ 8ₙ as shown in FIG. 4. The discount object party table 18 is renewed every time the discount object party is changed by the uses 8₁ ∼ 8ₙ.

The meter-rate charge calculation device 14 detects, when the meter-rate charge for each flow is calculated, the IP addresses of the sending source and the sending party for each flow generated resulting from the communication process by analysing flow information. Further, the meter-rate charge calculation device 14 specifies the users 8₁ ∼ 8ₙ of the sending source and the sending party, respectively, on the basis of the detected results and the IP address table 17. And, the meter-rate charge calculation device 14 confirms if the sending party of the flow has been registered as the discount object party, on the basis of the specified results and the discount object party table 18.

Thereafter, the meter-rate charge calculation device 14 calculates the meter-rate charge in flow unit of the sending source and the sending party, respectively, on the basis of the confirmed results as described. That is, the meter-rate charge calculation device 14 applies a standard charge table in accordance with a first charge form (hereinafter, called a standard charge table) to the meter-rate charge with respect to the users 8₁ ∼ 8ₙ of the sending source unless the sending parties are users 8₁ ∼ 8ₙ designated as the discount object parties, and applies a charge table for meter-rate billing which is in the form cheaper than the standard charge form if the users 8₁ ∼ 8ₙ of the sending party are the discount object parties, to calculate the meter-rate charge with respect to the communication flow thereof. Further, the meter-rate charge calculation device 14 similarly applies the standard charge table also to the meter-rate charge with respect to the users 8₁ ∼ 8ₙ of the sending party unless the users 8₁ ∼ 8ₙ of the sending source are the discount object parties, and applies the discount charge table for the discount object parties if the users 8₁ ∼ 8ₙ of the sending source are the discount object parties, to calculate the meter-rate charge with respect to the communication flow thereof. And, the meter-rate charge calculation device 14 outputs meter-rate charge data obtained as the results that applied the respective charge tables to the billing processing section.

And, the billing processing section 16 accumulates and adds charges for each flow based on the meter-rate charge data output from the meter-rate charge calculation device 15 by the calculation as described above for each of users 8₁ ∼ 8ₙ who concluded a billing contract under the meter-rate charge form. And, the billing processing section 16 lets the users 8₁ ∼ 8ₙ know the charges through the IP network, for example, with the added result for one month as the charges for that month, or draws the corresponding charges from the accounts of financial service providers of the users 8₁ ∼ 8ₙ. In this manner, in the internet connection service system 1, the provider 2 may carry out billing in the charge forms different at each of users 8₁ ∼ 8ₙ on the users 8₁ ∼ 8ₙ who concluded a billing contract under the meter-rate charge form.

Here, the constitution of the meter-rate charge calculation device 14 is shown in FIG. 5. As will be apparent also from FIG. 5, the meter-rate charge calculation device 14 is constituted by the arrangement that a CPU (Central Processing Unit) 20, a storage device 21 such as a hard disk device having various programs stored therein, a RAM (Random Access Memory) 22 as a work memory of CPU 20, and an input/output section 23 which functions as an interface at the time of communication between a flow information collection device 13, and data storage device 15 or a billing processing section 16 are connected through a bus 24.

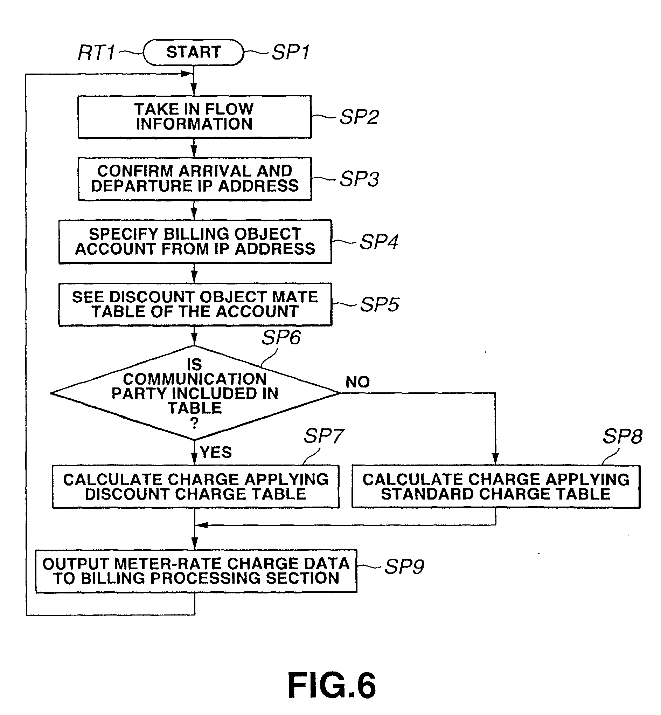

The CPU 20 carries out the first meter-rate charge calculation process as the billing process with respect to the users 8₁ ∼ 8ₙ by executing a first meter-rate charge process procedure RT1 shown in FIG. 6 on the basis of programs stored in the storage device 21.

The CPU 20 starts the meter-rate charge process procedure RT1 in Step SP1, then communicates with the flow information collection device 13 through the input/output section 23 in next Step SP2 to thereby take in flow information accumulated in the flow information collection device 13.

Then, the CPU 20 proceeds to Step SP3, where the flow information taken in in Step SP2 is analysed to thereby extract information with respect to the IP address of the sending source and the IP address of the sending party, and to confirm the IP address of the sending source and the IP address of the sending party, respectively.

Further, the CPU 20 then proceeds to Step SP4, communicates with the data storage device 15 through the input/output section 23 to read the IP address table 17 (FIG. 3) stored in the data storage device 15, and specify the sending source and the sending party of the flow, respectively, on the basis of the IP address table 17, and the IP address of the sending source and the IP address of the sending party confirmed in Step SP3.

Then, the CPU 20 proceeds to Step SP5, communicates with the data storage device 15 through the input/output section 23 to read the discount object communication party table 18 (FIG. 4) stored in the data storage device 15, after which proceeding to Step SP6 to judge if the communication party (the sending party or the sending source) is the discount object party with respect to the sending source and the sending party of the flow, respectively, on the basis of the discount object communication party table 18 and the specified result in Step SP3. That is, judgment is made whether or not the account ID of the communication party is an account ID designated as the discount object party with respect to the user's account ID of own IP address.

And, the CPU 20 proceeds, when obtaining the affirmation result in Step SP6, to Step SP7, where the discount charge table which provides the charges when communicating with the communication party having been designed is applied, with respect to the sending source and the receiving source of the flow, respectively, to calculate the charges with respect to the communication. It is noted that the discount charge table is a charge table set to the communication charge to a degree of 80% with respect to the standard communication charge, which may be the uniform discount rate for each of user's account, or may be one that can set the discount rate different for each user's account. On the other hand, the CPU 20 proceeds, when obtaining the negation result, to Step SP8, where the standard charge table is applied, with respect to the sending source and the receiving source of the flow , to calculate the charges with respect to the communication.

Thereafter, the CPU 20 further proceeds to Step SP9, and outputs the calculated result in the Step SP7 or the Step SP8 as the meter-rate charge data through the input/output section 23, after which it returns to the Step SP2 to sequentially repeat the similar process. The meter-rate charge calculation device 14 carries out the processes from the Step SP2 to the Step SP9 for each flow received from the flow information storage device 6, and repeats the processes from the Step SP2 to the Step SP9 with respect to all flows generated by communications for one month. Then the procedure RT1 ends.

Since each flow information is produced for each communication act (one communication) of a user, the performing of the processes from the Step SP2 to the Step SP9 means that the processes from the Step SP2 to the Step SP9 are carried out for each communication act of a user. Accordingly, as the result that the process from the Step SP2 to the Step SP9 are carried out with respect to all flows to which the user is related, with respect to the flow in which the communication party of a user was a communication party registered in advance, the discount charge based on the meter-rate charge table is applied, and with respect to the flow in which the communication party is judged to be other communication parties, the standard charge in accordance with the standard charge table is applied.

And, the meter-rate charge information and the standard charge information are output from the meter-rate charge calculation device 14 as communication usage charge information on the basis of communication carried out by user. The meter-rate charge information is charge information in which communication charges calculated using the meter-rate charge table are totalled, with respect to all flows representative of the communication in case the communication party is a communication party registered in advance, and the standard charge information is charge information in which communication charges calculated using the standard charge table are totalled, with respect to all flows representative of the communication in case the communication party is not a communication party registered in advance.

In the above-described constitution, in the first meter-rate charge calculation process, flow information representative of a flow generated from communication of the user is collected, judgment is made whether or not the flow is communication with the discount object party registered in advance with respect to the sending source and the sending party on the basis of the collected flow information respectively, and in case of the discount object party, the meter-rate charge with respect to the communication is calculated using the discount charge table, whereas in case of not the discount object party, the meter-rate charge with respect to the communication is calculated using the standard charge table, and the meter-rate charge with respect to the users 8₁ ∼ 8ₙ is billed on the basis of the calculated results.

Accordingly, according to the internet connection service 1, the provider 2 is able to bill under the charge system different for each of users 8₁ ∼ 8ₙ.

According to the above-described constitution, flow information representative of a flow generated from communication of the user is collected, judgment is made whether or not the flow is communication with the discount object party registered in advance with respect to the sending source and the sending party on the basis of the collected flow information, and in case of the discount object party, the meter-rate charge with respect to the communication flow is calculated using the discount charge table, whereas in case of not the discount object party, the meter-rate charge with respect to the communication flow is calculated using the standard table, and the meter-rate charge with respect to the users 8₁ ∼ 8ₙ is billed on the basis of the calculated results, whereby the provider 2 is able to carry out billing under the charge system different for each of users 8₁ ∼ 8ₙ, and thus providing a minute service for that portion to enable realization of the internet connection service system capable of enhancing the service.

In the aforementioned first meter-rate charge calculation process, a case has been described so that the meter-rate charge calculation device 14 is constituted as shown in FIG. 4 as calculation means configured such that judgment is made if the communication party is designated as the discount object party with respect to the users 8₁ ∼ 8ₙ of the sending source and the sending party of data for each flow on the basis of the IP address table 17 stored in the data storage device 15, the discount object party table 18 and the flow information, and in case the communication party is not the discount object party, the meter-rate charge with respect to the data is calculated in the first charge form using the standard charge table, whereas in case the communication party is the user of the specified communication party, the meter-rate charge with respect to the data is calculated using the discount charge table. However, the present invention is not limited thereto but various other constitutions can be applied widely.

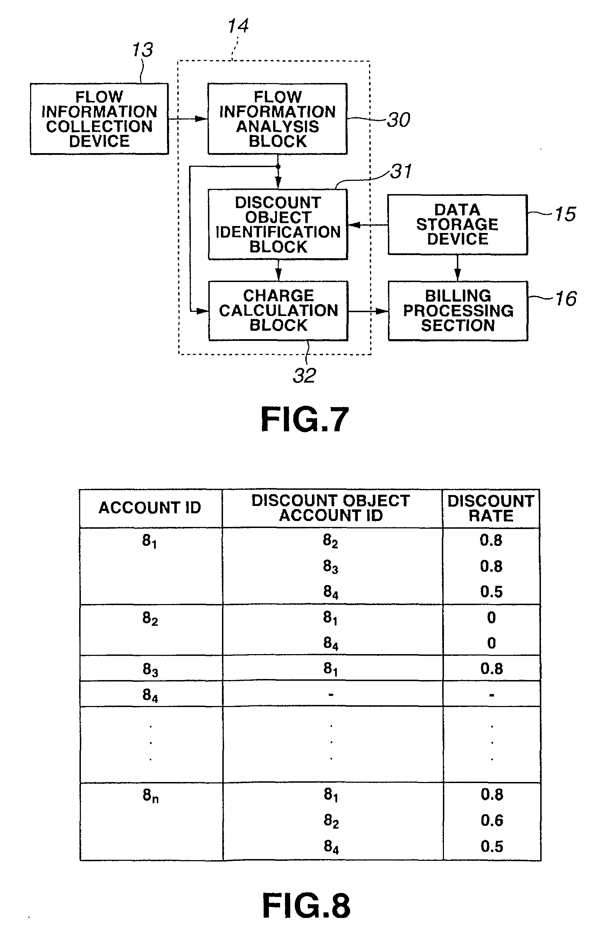

For example, as shown in FIG. 7, the process content of the meter-rate charge calculation device 14 can be sorted into functional blocks : a flow information analysis block 30 for analysing flow information obtained from the flow information collection device 13 to confirm the IP address of the sending source and the IP address of the sending party of flows, a discount object identification block 31 for identifying whether or not the communication party is the discount object party, with respect to the users 8₁ ∼ 8ₙ of the sending source and the sending party, on the basis of the analysed result of the flow information analysis block 30, the IP address table 17 stored in the data storage device 15 and the discount object party table 18, and a charge calculation block 32 for calculating charges with respect to the flow on the basis of the analysed result of the flow information analysis block 30 and the identified result of the discount object identification block 31.

While in the aforementioned first meter-rate charge calculation process, a case has been mentioned where in case the communication party is the discount object party irrespective of communication parties, the meter-rate charge is calculated on the basis of the discount object party table 18 shown in FIG. 4, the present invention is not limited thereto.

For example, as shown in FIG. 8, a method for designating a charge table applied for each discount object party, or a method for designating the discount rate with respect to the standard charge table for each discount object party may be also applied. And, by applying such methods as described, the discount charge can be changed for each designated party, and a further minute charge system can be provided.

Next, the second meter-rate charge calculation process capable of being benefited by discount more than the normal communication charge in case of carrying out communication within a group constituted by a plurality of users will be explained hereinafter.

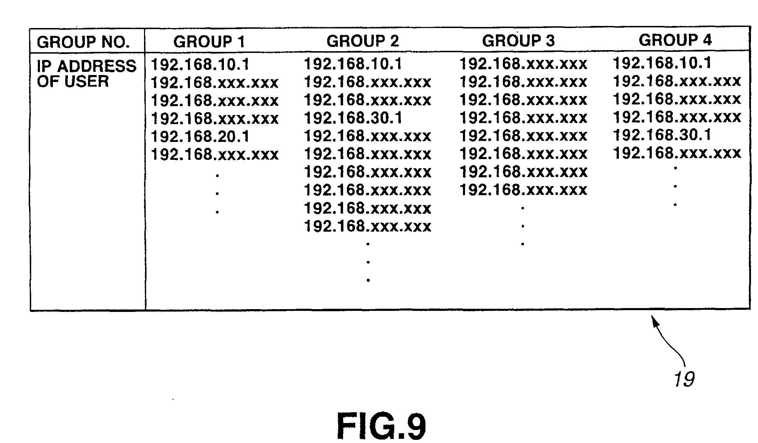

For carrying out the second billing process, at least, in the data storage device 15, a grouping table 19 shown in FIG. 9 has to be stored. For example, a case is supposed where a community is formed among a plurality of users, and data communication is frequently carried out between the users belonging to the community. However, in the meter-rate billing method of the present embodiment, a user is able to form, in advance, a group with a plurality of other users, in consideration of the fact as described above. The users 8₁ ∼ 8ₙ designate other users 8₁ ∼ 8ₙ to enable to register them as a single group together with these users 8₁ ∼ 8ₙ including oneself. The grouping table 19 shown in FIG. 9 is a table in which the group number is corresponded to the IP address of a user registered in the group.

The meter-rate charge calculation device 14 confirms, when the meter-rate charge is calculated by the second billing process, whether or not the IP address of the sending source and IP address of the sending party belong to one and the same group for each flow (that is, whether or not it is communication within one and the same group), referring to the grouping table 19, and in case of the communication within one and the same group, a charge table for traffic in the group preset is applied to the group, whereas in case of not the traffic in one and the same group, the standard charge table is applied, thereto to calculate the meter-rate charge with respect to the communication. And, the meter-rate charge calculation device 14 outputs the meter-rate charge data obtained, as the result that the charge table is applied, to the billing processing section 16.

It is noted that the charge table for traffic in a group is prepared individually for each group. The charge form provided in the charge table for traffic in a group is set to be cheaper in charge per reference unit (for example, time, transfer bite number or the like) of charge calculation than the charge form provided in the standard charge table. Accordingly, at the time of communication within one and the same group, the meter-rate charge is to be calculated to be cheaper as compared with the time of other communications.

In this manner, in the internet connection service system 1, the provider 2 may carry out billing in the charge form different for each of users 8₁ ∼ 8ₙ on the users 8₁ ∼ 8ₙ who concluded a billing contract in the meter-rate charge billing form.

It is noted, in case of this embodiment, the meter-rate charge calculation device 14 applies, when the charge table for traffic in a group is applied, the charge table for traffic in a group which is cheaper in charge per reference unit of charge calculation, in case there are a plurality of groups to which both the IP address of the sending source and the IP address of the sending party belong (for example, in FIG. 9, 192.168.10.1 and 192.168.30.1 belong to the group 2 and the group 4, respectively), the charge table for traffic in a group which is cheaper in charge per reference unit of charge calculation is applied.

Thereby, the internet connection service system 1 may provide a more minute service from a viewpoint of the users 8₁ ∼ 8ₙ with respect to the users 8₁ ∼ 8ₙ.

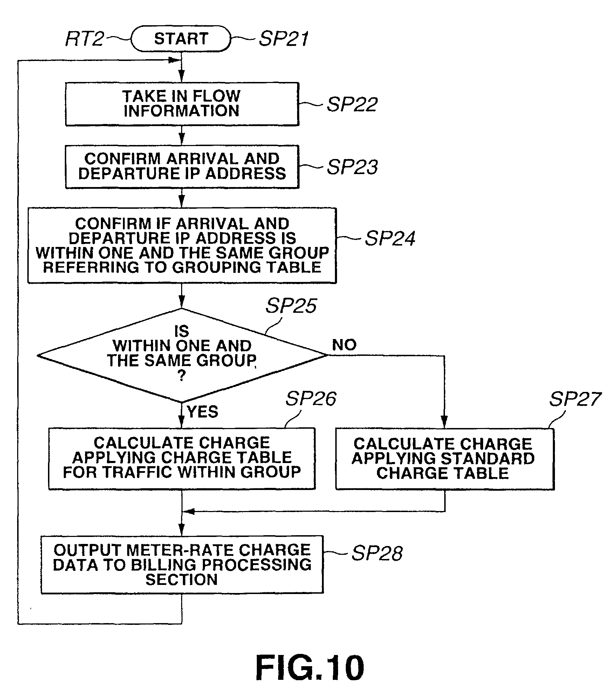

The CPU 20 in the meter-rate charge calculation device 14 executes a second meter-rate charge calculation process procedure RT2 shown in FIG. 10 on the basis of programs stored in the storage device 21, to thereby carry out the second meter-rate charge calculation process as the billing process on the users 8₁ ∼ 8ₙ who concluded a billing contract in the meter-rate charge form.

The CPU 20 starts the second meter-rate charge calculation process procedure RT2 in Step SP21, and thereafter, communicates with the flow information collection device 13 through the input/output section 23 in next Step SP22 to thereby take in flow information accumulated in the flow information collection device 13. Then, the CPU 20 proceeds to Step SP23, where the flow information taken in in Step SP22 is analysed, to thereby extract the IP address of the sending source and the IP address of the sending party, and confirms the IP address of the sending source and the IP address of the sending party, respectively.

And, in the next step SP24, the CPU 20 communicates with the data storage device 15 through the input/output section 23 to confirm whether or not both the IP address of the sending source and the IP address of the sending party of the communication belong to which group on the basis of the grouping table 19 (FIG. 3) stored in the data storage device 15 and judges whether or not the communication is communication in one and the same group in the next Step SP25.

And, the CPU 20 proceeds, when obtaining the affirmation result in Step SP25, to Step SP26 where the charge table for traffic in a group corresponding to the group is applied to calculate the charge with respect to the communication. The charge table for traffic in a group is a charge table provided with the charge when communication takes place in one and the same group, for example, a table in which the discount rate to a degree of 70% is set with respect to the standard charge. On the other hand, when obtaining the negation result, the step proceeds to Step SP27 where the standard charge table is applied to calculate the charge with respect to the communication.

Further, thereafter, the CPU 20 proceeds to Step SP25, and outputs the calculated results in the Step SP26 or the Step SP27 to the billing processing section 16 through the input/output section 23 as the meter-rate charge data, after which returns to the Step SP22 to repeat the similar processes sequentially. The meter-rate charge calculation device 14 carries out the processes from the Step SP22 or the Step SP28 for each flow received from the flow information storage device 6 and repeats the Step SP22 or the Step SP28 with respect to all flows generated by communications for one month. Then, the procedure RT2 ends.

The performing of the processes from the Step SP22 to the Step SP28 for each flow information means that the processes from the Step SP22 to the Step SP28 are carried out for each communication unit of the user. Accordingly, as the result that the processes from the Step SP22 to the Step SP28 were carried out with respect to all flows to which the user relates, with respect to the flow of communication in case the communication party of the user is a communication party registered in one and the same group, the discount charge based on the charge table for traffic in a group is applied, whereas with respect to the flow in which the communication party is judged to be other communication parties, the standard charge in accordance with the standard charge table is applied.

And, meter-rate charge information and standard charge information are output as communication usage charge information based on the communication carried out by the user from the meter-rate charge calculation device 14. The meter-rate charge information is charge information in which the communication charges calculated using the charge table for traffic in a group with respect to all flow corresponding to the communication in case the communication party of the user is a communication party registered in one and the same group are totalled, and the standard charge information is charge information in which the communication charges calculated using the standard charge table with respect to all flows corresponding to the communication in a case where the communication party of the user is not a communication party registered in one and the same group are totalled.

In the above-described constitution, in the second meter-rate billing method, flow information is collected to judge if the flow is one generated by communication in one and the same group registered in advance on the basis of the collected flow information, and when it is generated by the communication in one and the same group, the meter-rate charge with respect to the communication is calculated using the charge table for traffic in a group set to the group, whereas when it is not generated by the communication in one and the same group, the meter-rate charge with respect to the communication is calculated using the standard charge table, whereby the meter-rate charge with respect to the users 8₁ ∼ 8ₙ is billed on the basis of the calculated results.

Accordingly, according to the internet connection service system 1, the provider 2 is able to carry out billing in the charge system different for each of users 8₁ ∼ 8ₙ.

Further, in the second meter-rate billing method, flow information is collected to confirm if the flow is generated by communication in one and the same group registered in advance on the basis of the collected flow information, and when it is generated by communication in one and the same group, the meter-rate charge with respect to the communication is calculated using the charge table for traffic in a group corresponding to the group, whereas when it is not generated by the communication in one and the same group, the meter-rate charge with respect to the communication is calculated, and the meter-rate charge with respect to the users 8₁ ∼ 8ₙ is billed on the basis of these calculated results, whereby billing in the charge system different for each of users 8₁ ∼ 8ₙ can be carried out, thus providing more minute service and enabling to realize the internet connection service system capable of enhancing the service.

Next, the third meter-rate billing process capable of being benefited by discount more than the normal communication charge, in case the user carries out communicates with the communication party designated in advance, and in case where the communication party is a communication party in one and the same group as oneself registered in advance, will be explained hereinafter.

For carrying out the third meter-rate billing process, at least, the IP address table 17 shown in FIG. 3, the discount object party table 18 shown in FIG. 4, and the grouping table 19 shown in FIG. 9 have to be stored in the data storage device 15.

The meter-rate charge calculation device 14 executes meter-rate billing process, when the meter-rate charge is calculated by the third meter-rate charge calculation process, referring to three tables, i.e., the IP address table 17, the discount object party table 18, and the grouping table 19. More specifically, only in case the communication party when the user is communicated is a party designated in advance and in case the IP address of the sending source and the IP address of the sending party of the user belong to one and the same group, both the charge table for the discount object party and the charge table for traffic in a group are applied to calculate the meter-rate charge with respect to the communication. That is, the discount rate according to the third meter-rate charge calculation process is the discount rate obtained by multiplying the discount rate according to the charge table for the discount object party by the discount rate according to the charge table for traffic in a group, making it possible to realize the greater discount rate than the discount rate according to the aforementioned first and second meter-rate charge calculation processes. Thereby, in the internet connection service system 1, the service more minute from a viewpoint of the users 8₁ ∼ 8ₙ can be provided with respect to the users 8₁ ∼ 8ₙ.

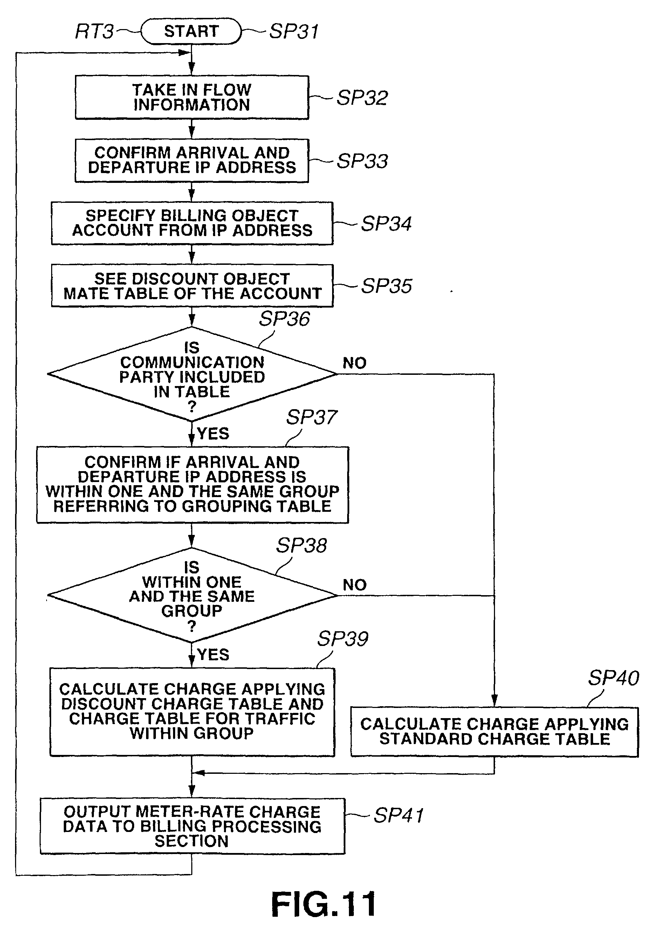

The CPU 20 of the meter-rate charge calculation device 14 executes the third meter-rate charge calculation process procedure RT3 shown in FIG. 11 on the basis of programs stored in the storage device 21 to thereby carry out the third meter-rate charge calculation process as the billing process with respect to the users 8₁ ∼ 8ₙ who concluded a billing contract in the meter-rate charge form.

The CPU 20 starts the third meter-rate charge calculation process procedure RT3 in Step SP31, and thereafter communicates with the flow information collection device 13 through the input/output section 23 in the next Step SP32, whereby flow information accumulated in the flow information collection device 13 is taken in. Then, the CPU 20 proceeds to Step SP33, where the flow information taken-in in Step SP32 is analysed to thereby extract information relating to the IP address of the sending source and the IP address of the sending party and confirm the IP address of the sending source and the IP address of the sending party, respectively.

Further, thereafter, the CPU 20 proceeds to Step SP34 and communicates with the data storage device 15 through the input/output section 23 to read the IP address table 17 (FIG. 3) stored in the data storage device 15 and specifies the sending source and the sending party of the flow, respectively, on the basis of the IP address table 17, and the IP address of the sending source and the IP address of the sending party confirmed in Step SP 33.

Then, the CPU 20 proceeds to Step SP35 and reads the discount object communication party table 18 (FIG. 4) stored in the data storage device 15, and thereafter proceeds to Step SP36 to judge whether or not the communication party (the sending party or the sending source) is the discount object party, with respect to the sending source and the sending party of the flow, on the basis of the discount object communication party table 18, and the specified result in Step SP33. That is, judgment is made whether or not the account ID of the communication party is an account ID designated as the discount object party with respect to the user's account ID of own IP address.

The CPU 20 confirms, when obtaining the affirmation result in Step SP36, whether or not both the IP address of the sending source and the IP address of the sending party of the communication belong to which group on the basis of the grouping table 19 (FIG. 9) stored in the data storage device 15 in Step SP37, and judges whether or not the communication is communication within one and the same group, in the next Step SP38, on the basis of the confirmed results.

The CPU 20 proceeds, when the affirmation result is obtained in Step SP38, to Step SP39. The CPU 20, in Step SP39, applies both the charge tables, the discount charge table providing the charge when communicated with the communication party having been designated, and the charge table for traffic in a group providing the charge when communicated in one and the same group, with respect to the sending source and the receiving source of the flow, to calculate the charge with respect to the communications.

The CPU 20 further proceeds to Step SP41, and outputs the calculated result in Step SP 37 or Step SP 38 as the meter-rate charge data to the billing processing section 16 through the input/output section 23, after which the CPU 20 returns to Step SP32 to repeat the similar processes sequentially. The meter-rate charge calculation device 14 carries out the processes from Step SP32 to Step SP39 for each flow received from the flow information storage device 6 to repeat the processes from Step SP32 to Step SP39 with respect to all flows generated by communications for one month. Then, the procedure RT1 ends.

And, meter-rate charge information and standard charge information are output as communication usage charge information based on the communication carried out by the user from the meter-rate charge calculation device 14. The meter-rate charge information is charge information in which communication charges calculated using both tables, i.e., the meter-rate charge table and the charge table for traffic in a group are totalled with respect to all flows representative of communications in case the communication party is a communication party registered in advance and in case the communication party of the user is a communication party registered in one and the same group; and the standard charge information is charge information in which communication charges calculated using the standard charge table with respect to all flows representative of communications in case the communication party is not a communication party registered in advance and in case the communication party of the user is not a communication party registered in one and the same group are totalled.

In the above-described constitution, in the third meter-rate charge calculation process, the meter-rate charge with respect to the communication is calculated using both tables, i.e., the discount charge table in which the charge is set for the discount object party, and the charge table for traffic in a group set to the group, in case the communication party of the user is a discount object party registered in advance, with respect to the sending source and sending party on the basis of the all flows collected, and the communication party is other users registered in one and the same group in which the user is registered. That is, according to the third meter-rate charge calculation method, it is possible to be benefited by the discount rate given by the first meter-rate charge calculation process and also benefited by the discount rate given by the second meter-rate charge calculation process.

In the first, second and third meter-rate charge calculation processes, a description has been made of a case where they are applied to the internet connection service. It is noted, however, that the present invention can be also applied widely, not limiting thereto, to a LAN (Local Area Network) other than the internet or a meter-rate charge calculation system for calculating the meter-rate charge of a network such as a telephone circuit network. Further, in the first, second and third meter-rate charge calculation processes, a description has been made of a case where as storage means for storing the first table in which the IP addresses of the users 8₁ ∼ 8ₙ are stored (the IP address table 17), and the second table in which the IP addresses of the specified communication party user (discount object party) for each of users 8₁ ∼ 8ₙ designated in advance, the data storage device 15 formed from a hard disk device or the like. It is noted, however, that the present invention may be, not limiting thereto, of a memory provided internally of the meter-rate charge calculation device 14, and in short, other various memory means can be applied widely as long as they can store the first and second tables readably.

Further, in the first, second and third meter-rate charge calculation processes, a description has been made of a case where as a communication unit for calculating the meter-rate charge, a flow unit is applied. It is noted, however, that the present invention is not limited thereto, but the communication unit for calculating the meter-rate charge may be of a communication time, a communication bite number or a flow number.

Further, in the first, second and third meter-rate charge calculation processes, a description has been made of a case where as detection means for detecting the users 8₁ ∼ 8ₙ of the sending source and the sending party of data transmitted through the network 3 for each predetermined communication flow, the edge routers 5₁ ∼ 5ₙ are applied. It is noted, however, that the present invention is not limited thereto, but in short, other various devices and methods can be applied widely as long as they can detect the IP addresses of the users 8₁ ∼ 8ₙ of the sending source and the sending party of flow transmitted through the IP network 3.

Further, in the first, second and third meter-rate charge calculation processes, a description has been made of a case where in the present embodiment, take-in means for taking in, from outside, the IP addresses of the users 8₁ ∼ 8ₙ of the sending source and the sending party for each predetermined flow of data transmitted through the IP network 3 in the meter-rate charge calculation device 14 is constituted by the CPU 20 and the input/output section 23. It is noted, however, that the present invention is not limited thereto, but other various constitutions can be applied widely according to the form of the meter-rate charge calculation device 14.

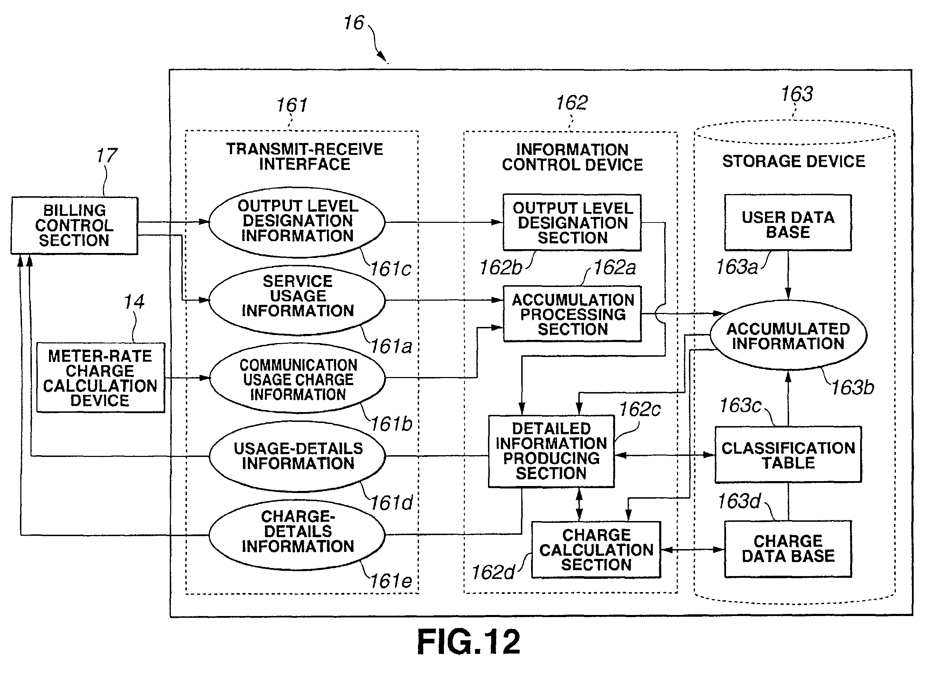

Next, the billing processing section 16 for carrying out the billing process with respect to the users from the result of the meter-rate charge calculated by the meter-rate charge calculation section 14 will be explained in detail with reference to FIG. 12.

The billing processing section 16 is a computer device comprising a transmit-receive interface 161 for carrying out the transmit-receiving of data with the billing control section 17 and the meter-rate charge calculation device 14, an information control device 162 constituted by a processor by way of semiconductors or ROM, RAM, etc., for carrying out setting or accumulation process of various data, and calculation process of final charges, and a storage device 163 as non-volatile storage means such as a hard disk for storing various data.

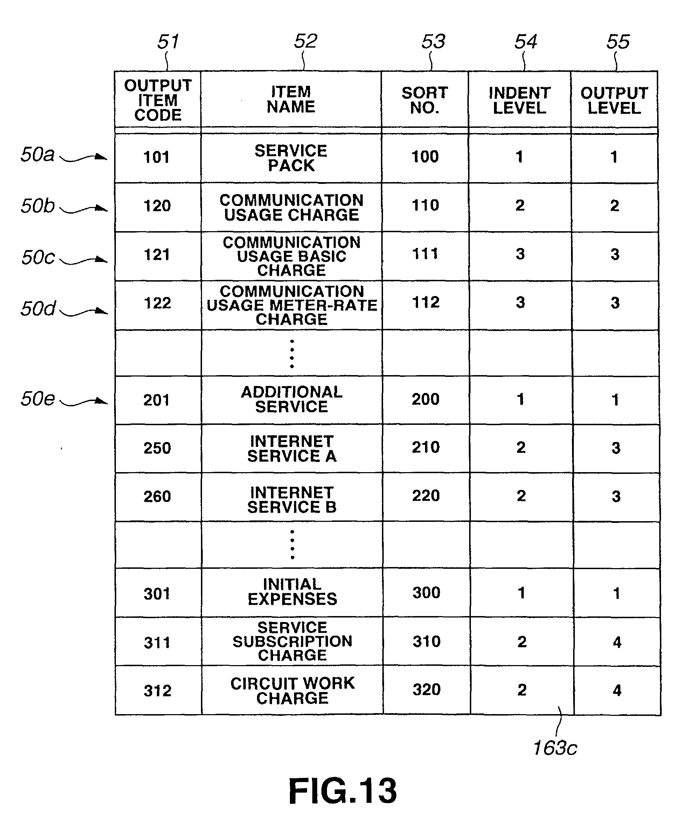

Here, output level designation information 161c shows an output level set for each output item explained in FIG. 13; service usage information 161a is information having no connection with a communication amount of the user, showing, for example, an additional service, a basic charge of the user, a circuit work charge and so on; and communication usage charge information 161b is information relating to the communication charge supplied from the meter-rate charge calculation device 14, specifically including the communication usage standard charge determined by the standard charge table and the communication usage meter-rate charge determined by the charge table for meter-rate charge calculation.

The information control device 162 functions as an accumulation processing section 162a for accumulating the service usage information 161a and the communication usage charge information 161b, an output level designation section 162b for setting the output level designation information 161c for designating output levels of items in usage-details information 161d and charge-details information 161e, a detailed information producing section 162c for producing the usage-details information 161d representative of a detailed statement of demand and the charge-details information 161e for informing the charges resulting therefrom, and a charge calculation section 162d for calculating all charge information stated in the charge-details information 161e. These processes are actually realized by being described as programs and stored in a storage device 163, and executed by a processor. Further, in the storage device 163 are stored a user data base 163a storing therein a user account ID and other user information, a classification table 163c defined in hierarchical construction with respect to items stored in the charge-details information 161e, and a charge data base 163d stating about various charge information to be demanded on the user.

The user information stored in the user data base 163a is, for example, credit card certification information of the user making use of the internet connection service or an user account ID given to the user, and is used for controlling the service usage information 161a or communication usage charge information 161b. This user information is set when a service contract is concluded with the user.

The accumulated information 163b is information in which the user account ID is related to the service usage information 161a or the communication usage charge information 161b. More specifically, the service usage information 161a or the communication usage charge information 161b supplied from the transmit-receive interface section 161 in response to the process of the accumulation processing section 162a is accumulated as the accumulated information 163b in the memory device 163 for each user account ID. The accumulated information 163b is totalled for each predetermined time, for example, one month, and accumulated in the storage device 163, and the accumulated information 163b within that time is transmitted to the detailed information producing section 162c on demand for producing process of the usage-details statement or the charge-details statement.

In the detailed information producing section 162c, the detailed information producing process is carried out adjusting to the output level designated by the output level designation section 162b to produce the usage-details information 161d and the charge-details information 161e. Further, those generated periodically during the predetermined period out of the service usage information 161a may be stored automatically in the accumulated information 163b by the process of the accumulation processing section 162a. The detailed information producing section 162c produces information relating to the output items of the charge-details information 161e, in accordance with the designation of an output level and the definition in a classification table 163c. Further, in accordance with the constitution of the output items, reference is made to a charge data base 163d by the process of the charge calculation section 162d, and the charge is calculated. Here, FIG. 13 shows an example of the classification table 163c in the billing processing section 16. In the classification table 163c in FIG. 13, there are defined an output item code 51 for classifying items described in the demand-details statement, an item name 52 which includes item names described, a sort number 53 showing the order described, an indent level 54 for designating an amount of moving down a character from the head of a line when a position for describing the item name 52 is determined, and an output level 55 showing minuteness of classification of items at the time of description. In the classification table 163c, the items described in the detailed statement of demand are defined using the hierarchical construction in accordance with the kind or characteristics of the items. The hierarchical construction is defined by the sort number 53 and the indent level 54.

The sort number 53 means that the greater the numerical value is, the later its item name 52 is described. Further, the indent level 54 defines the amount for providing a blank from the head of a line with respect to the item name 52 in a low-ranking conception of each item for clearly expressing the classification, and the greater the numerical value is, the greater the indentation amount is. That is, if the numerical value of the indent level 54 is the same, the depth of the hierarchy of the item is equal.

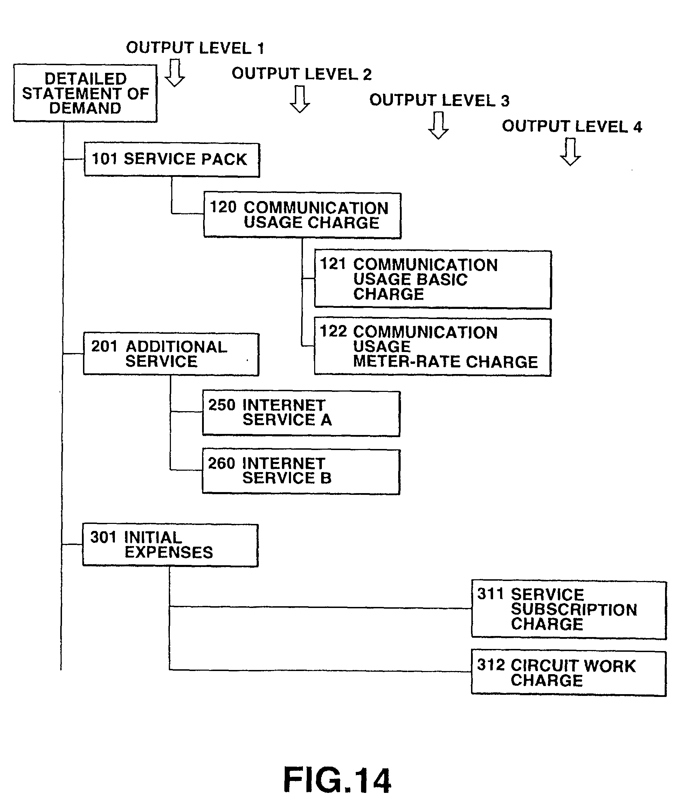

For example, in the item name 52, paying attention to the item 50a of "Service pack" and the item 50b of "Communication usage charge", the sort number 53 defined in the item 50b is greater than the sort number 53 of the item 50a, which is the nearest numerical value, and the indent level 54 is similarly the numerical value greater by one, whereby the item 50b is defined to be the small hierarchy of the item 50a. That is, the name of "Communication usage charge" is a name of the low-ranking conception showing the content of "Service pack". Likewise, the item 50c whose item name 52 is "Communication usage basic charge" is defined as the small hierarchy of the item of "Communication usage charge". Further, in the item 50d of "Communication usage meter-rate charge", the indent level 54 is the same numerical value, but is greater in the sort number 53 by one, as compared with in the item 50c of "Communication usage basic charge". Accordingly, the item 50d is the small hierarchy of the item 50b but is described on the next line of the item 50c. Further, the item 50a, whose item name 52 is "Service pack" and the item 50e is "Additional service", are equal in the indent level 54 but the item 50e is described after by the definition of the sort number 53. FIG. 14 is a view conceptually showing the hierarchical construction of the classification table 163c. The hierarchical construction of the classification table 163c is provided by the output level 55. For example, the items such as "Service pack", "Additional service" and "Initial expense" designated to the output level 1 are positioned in a first hierarchy; the items such as "Communication usage charge", "Internet service A" and "Internet service B" designated to the output level 2 are positioned in a second hierarchy; the items such as "Communication usage charge", "Internet service A" and "Internet service B" designated to the output level 2 are positioned in a second hierarchy; the items such as "Communication usage basic charge" and "Communication usage meter-rate charge" designated to the output level 3 are positioned in a third hierarchy; and the items such as "Service subscription charge" and "Circuit work charge" designated to the output level 4 are positioned in a fourth hierarchy.

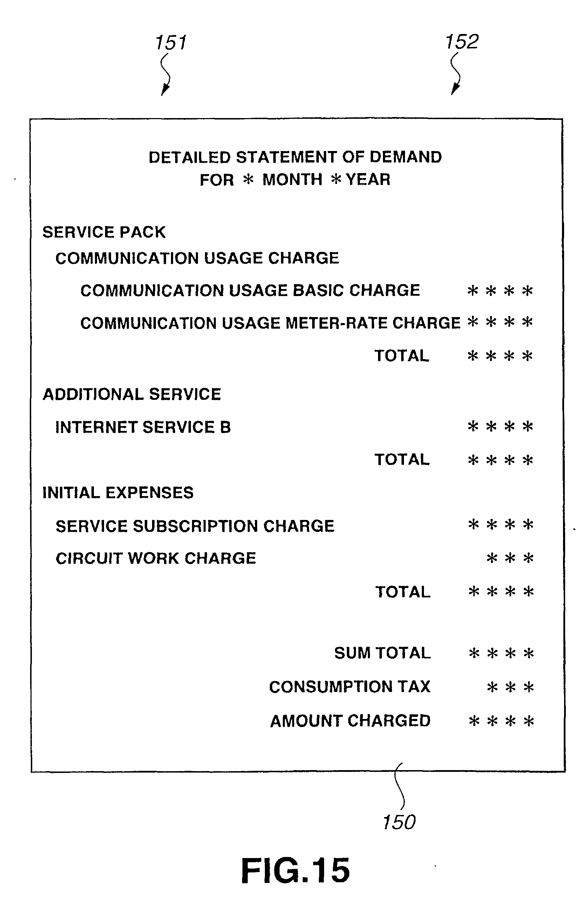

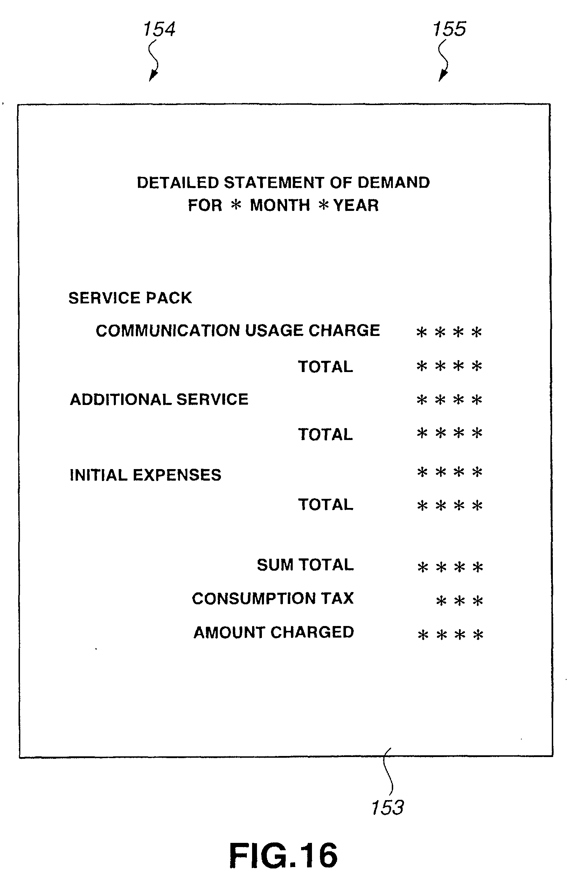

An example of description of the detailed statement of demand produced using the classification table 163c defined as described above is shown. FIG. 15 shows the detailed statement of demand in case the designation of the output level 55 is "4", and FIG. 16 shows the detailed statement of demand in case the designation of the output level 55 is "2". A detailed statement of demand 150 of FIG. 15 is constituted by an item description section 151 in which the item name 52 is described, and a demand price description section 152 in which the price calculated according to the item is described. Since the setting of the output level 55 is "4", the item name 52 in which the output level 55 is defined as 1 ∼ 4 by the classification table 163c is described. Similarly, a detailed statement of demand 153 of FIG. 16 is constituted by an item description section 154 and a demand price description section 155, and since the setting of the output level 55 is "2", the item name 52 in which the output level 55 is defined as 1 ∼ 2 by the classification table 163c is described. Further, a subtotal for each classification of items may be described to calculate and describe charges within the classification. Further, alternatively, for example, in case of discounting charges, the reasons therefor are described as "Note", and the note also defines the output level 55 similarly to other items and sets when the detailed statement is produced, or the level for describing the note is separately defined and set. The designation of the output level 55 when the detailed statements of demand 150 and 153 are output is input and set as the output level designation information 161c, for example, at the time of a service contract or when the detailed statements of demand 150 and 153 are output, and thereafter, the designation is changed according to the request of a demander of charges or a receiver of a detailed statement of demand. Thereby, the detailed statements of demand 150 and 153 classified suitable for the purpose of reading can be produced.

The classification table 163c as described above is registered in advance in the storage device 163. In the detailed information producing section 162c, the item name 52 described in the detailed statement of demand is decided by the designation of the classification table 163c and the output level 55. Further, information of the decided items of the detailed statement of demand is delivered to the charge calculation section 162d, and the prices necessary for description are calculated referring to the charge data base 163d. In the charge data base 163d, there are stored the output item code 51 defined in the hierarchy of the terminal of the hierarchical construction defined in the classification table 163c and charge information corresponding thereto. That is, the provided charges included in the service usage information 161a and corresponding to various items are registered.

The charge calculation section 162d receives information relating to the service usage information 161a accumulated in the accumulated information 163b, and the charge information corresponding to the service usage information 161a is extracted from the charge data base 163d. The charge calculation section 162d supplies the charge information extracted from the charge data base 163d to the detailed information producing section 162c. The charge information extracted from the charge data base 163d is charge information corresponding to the service usage information 161a, and therefore, is for example, charges such as a service subscription charge or a circuit work charge, which are charges not relating to the communication amount for the user.

The detailed information producing section 162c receives the communication usage charge information 161b and the output level designation information 161c stored in the storage device 163 as the accumulated information 163b, and receives charge information calculated by the charge calculation section 162d to produce the detailed statement of demand on the basis of these information. When prices, subtotals, consumption taxes and so on individually to the items are calculated and the total price is calculated finally, the charge-details information 161e in which they are described is supplied to the billing control section 17.

The billing control section 17 produces a file in which the charge-details information 161e is expressed by text data or HTML data to transmit it to the user through an e-mail. Alternatively, for example, these data are carried on a home page produced by communication providers in the billing control section 17, the user gets access to the home page, and reading is enabled by inputting a pass-word. Or, charge-detailed information is printed out on a sheet of paper whereby the detailed statement of demand or the detailed statement of usage, which is mailed to the user.

As described above, according to the constitution of the billing processing section 16, charge items of demand output to the charge-details information by the classification table are classified in the hierarchical construction, and in the demand information storage means, demand information of charges with respect to the demand charge items applicable to the hierarchy of the terminal of the hierarchical construction is accumulated and stored. In the charge details producing means, when the charge details information is produced, the demand charge items from an upper-ranking of the hierarchical construction to a predetermined position designated as an output level are output, whereby the minuteness of the classification of the demand charge items output can be changed to enable outputting the charge details information totalled properly according to the object of reading and the features of the demand charge items.

### Industrial Applicability

As described above, in the communication charge calculation method according to the present invention, flow information of communication carried out by the user is analysed to thereby detect the IP address of the communication party, and in case the IP address of the communication party is an IP address registered in advance by the user, the communication charge corresponding to the communication carried out by the user is calculated in the discount charge form. Further, in the communication charge calculation method according to the present invention, flow information of communication carried out by the user is analysed to thereby detect the IP address of the communication party, and the charge form of communication charge with respect to the communication carried out by the user corresponding to the IP address of the communication party is controlled.

That is, the uniform meter-rate charge billing process is not merely carried out for the user according to only the amount of communication data of the communication carried out by the user, but the discount charge form which discounts communication charge according to the communication party with whom the user is communicated is applied whereby billing in the individual charge form can be carried out for each user. Further, by carrying out the discount process as described appropriately to the communication party, the billing service having a variety of variations and the billing service to which is applied the communication charge calculation method having flexibility can be provided.

Further, in the communication charge calculation method according to the present invention, flow information of communication carried out by the user is analysed to thereby detect the IP address of the communication party, and in case the communication party is a communication party registered in a group of the users, the discount charge form different from the standard communication charge is used so as to calculate the communication charge carried out by the user. That is, the uniform meter-rate charge billing process is not merely carried out for the user according to the amount of communication data of the user, but the discount charge form which discounts communication charge according to a group to which the communication party with whom the user communicated belongs is applied whereby billing in the individual charge form can be carried out for each user. Further, by applying the charge form different at each plurality of groups, the billing service rich in variations and flexibility can be provided for the user.

As a result, according to the communication charge calculation method of the present invention, the optimum communication charge calculation method different in discount price according to the communication amount carried out by the user and the communication party is applied whereby the billing service different for each user can be provided. Further, by varying the communication discount form according to the communication of the user, the charge calculation method rich in flexibility not having been found heretofore can be provided. Furthermore, by applying the communication charge calculation method according to the present invention, the minute communication service can be provided for the user to enhance the service.

## Claims

1. A communication charge calculation method for calculating the meter-rate charge appropriate to a usage degree of a network for each user, comprising:
a first step for storing a first table having addresses on the network of the users stored therein, and a second table having therein addresses of users of specific communication parties for said each user designated in advance;
a second step for detecting, said addresses of users of the sending source and the sending party of data transmitted via said network at a predetermined communication unit; and
a third step for judging if the communication party is designated as a user of said specific communication party, with respect to each of said users of said sending source and said sending party of said data at said communication unit, on the basis of said first and second tables stored in said first step and the detected results in said second step, and in case said communication party is not the user of said specific communication party, calculating said meter-rate charge with respect to said data in a first charge form, whereas in case said communication party is the user of said specific communication party, calculating said meter-rate charge with respect to said data in a second charge form.

2. A communication charge calculation method for calculating the meter-rate charge appropriate to a usage degree of a network for each user, comprising:
a first step for storing a first table having addresses on the network of users stored therein, and a second table having therein addresses of users of specific communication parties for said each user designated in advance;
a second step for taking in, from outside, said addresses of each of said users of the sending source and the sending party of data transmitted via said network at a predetermined communication unit; and
a third step for judging if the communication party is designated as a user of said specific communication party, with respect to each of said users of said sending source and said sending party of said data at said communication unit, on the basis of said first and second tables stored in said first step and the addresses of said users taken in in said second step, and in case said communication party is not the user of said specific communication party, calculating said meter-rate charge with respect to said data in a first charge form, whereas in case said communication party is the user of said specific communication party, calculating said meter-rate charge with respect to said data in a second charge form.

3. A communication charge calculation method for calculating the meter-rate charge appropriate to a usage degree of a network for each user, comprising:
a first step for tabulating and storing addresses on said network at said each user belonging to a group registered in advance;
a second step for detecting said addresses each of said users of the sending source and the sending party of data transmitted via said network at a predetermined unit; and
a third step for judging if said addresses of said sending source and said sending party of said data belong to said one and same group, at said predetermined unit, on the basis of the detected result in said second step and said table, and in case of belonging to said one and the same group, calculating the meter-rate charge with respect to said data in a first charge form, whereas in case of not belonging to said one and the same group, calculating said meter-rate charge with respect to the data in a second charge form.

4. The communication charge calculation method according to claim 3, wherein said first charge form is set for each said group.

5. The communication charge calculation method according to claim 4, wherein in said third step, in case there are a plurality of said groups to which both said addresses of said sending source and said sending party of said data commonly belong, said meter-rate charge is calculated using said first charge form of the highest preferential order of said group in the preset predetermined conditions.

6. A communication charge calculation method for calculating the meter-rate charge appropriate to a usage degree of a network for each user, comprising:
a first step for tabulating and storing addresses on said network for said each user belonging to a group registered in advance;
a second step for taking in, from outside, said addresses of said users of the sending source and the sending party of data transmitted via said network at a predetermined unit; and
a third step for judging if said addresses of said sending source and said sending party of said data belong to said one and the same group, at said predetermined unit, on the basis of said addresses of said users of said sending source and said sending party taken in at said predetermined unit, and said table stored in said first step, and in case of belonging to said one and the same group, calculating said meter-rate charge with respect to said data in a first charge form, whereas in case of not belonging to said one and the same group, calculating said meter-rate charge with respect to said data in a second charge form.

7. A communication charge calculation apparatus for calculating, when a user carries out communication with a communication party via a network, the charge appropriate to the communication carried out by said user, comprising:
detection means for detecting an IP address of a communication party by analysing flow information of communication carried out by said user; and
calculation means for calculating the communication charge appropriate to communication carried out by said user in the discount charge form which discounts the standard charge form in case the IP address of the communication party is an IP address registered in advance by said user.

8. The communication charge calculation apparatus according to claim 7, wherein said calculation means calculate the communication charge appropriate to the communication carried out by said user in the standard charge form, in case the IP address of said communication party is not an IP address registered in advance by said user.

9. The communication charge calculation apparatus according to claim 7, wherein said detection means obtain all flow information produced on the basis of all communications carried out by said user within a predetermined period, and
said calculation means calculate the communication charge at said each flow information.

10. The communication charge calculation apparatus according to claim 7, wherein said user and said communication party are always connected to an IP network provided by an internet provider, and proper IP addresses are assigned to said user and said communication party, respectively.

11. The communication charge calculation apparatus according to claim 10, wherein the communication between said user and said communication party is the communication carried out via said IP network and an edge router connected to said IP network, in case the communication is carried out between said user and said communication party, flow information indicative of said communication is stored in storage means on said edge router side, and
said detection means read said flow information from said edge router when the communication charge of said user is calculated.

12. The communication charge calculation apparatus according to claim 8, wherein said calculation means perform processing for calculating said communication charge at each plurality of flows appropriated to a plurality of communications carried out by said users,
by summing up the communication charges calculated from flow information for which communication charges are calculated in said discount charge form out of said plurality of flow information, the meter-rate charge information indicative of the charge which summed up all communication charges with respect to the communication subjected to discounting out of said plurality of communications is produced, and
by summing up the communication charges calculated from flow information for which communication charges are calculated in said standard charge form out of said plurality of flow information, the standard charge information indicative of the charge which summed up all communication charges with respect to the communication subjected to discounting out of said plurality of communications is produced.

13. The communication charge calculation apparatus according to claim 7, further comprising:
billing means for carrying out a billing process on said user on the basis of said meter-rate charge information and said standard charge information calculated by said calculation means, and
wherein said billing means reflect said meter-rate charge information and said standard charge information on a detailed statement of communication usage provided to said user.

14. The communication charge calculation apparatus according to claim 7, further comprising:
billing means for carrying out a billing process on said user on the basis of said communication charge calculated by said calculation means.

15. The communication charge calculation apparatus according to claim 14, wherein said billing means produce a detailed statement of usage charge which describes the charge to be billed on said user on the basis of said communication charge calculated by said calculation means.

16. The communication charge calculation apparatus according to claim 15, wherein said billing means comprise means for classifying charge demand items described in said detailed statement of charges by a hierarchical construction and preparing a classification table which defined an output level indicative of classification of said charge demand items in connection with said hierarchical construction, means for producing a charge data base which defines charges of said charge demand items, and means for producing said charge-details information on the basis of said output level designated in advance by said user, referring to said classification table and said charge data base.

17. A communication charge calculation apparatus for calculating, when a user carries out communication with a communication party via a network, the charge appropriate to the communication carried out by said user, comprising:
detection means for detecting an IP address of a communication party by analysing flow information of communication carried out by said user; and calculation means for calculating communication charges carried out by said user, using the discount charge form different from the standard communication charge, in case said communication party is a communication party registered in a group of said users.

18. The communication charge calculation apparatus according to claim 17, wherein in case there are a plurality of groups to which said user and said communication party belong, the discount charge form different at said each group is set, and
said calculation means calculate said communication charge using the charge form of the highest preferential order of group out of said plurality of groups.

19. A communication charge calculation method for calculating, when a user carries out communication with a communication party via a network, the charge appropriate to the communication carried out by said user, comprising:
a detection step for detecting an IP address of a communication party by analysing flow information of communication carried out by said user; and
a calculation step for controlling the charge form of communication charge with respect to communication carried out by said user appropriate to an IP address of said communication party.

20. A communication charge calculation method for calculating, when a user carries out communication with a communication party via a network, the charge appropriate to the communication carried out by said user, comprising:
a detection step for detecting an IP address of a communication party by analysing flow information of communication carried out by said user; and
a calculation step for controlling the discount rate of the communication charge with respect to communication carried out by said user appropriately to an IP address of said communication party.

21. A communication charge billing method for billing the charge appropriate to communication carried out by a user on said user when said user carries out communication with a communication party via a network, the method comprising:
a detection step for detecting an IP address of a communication party by analysing flow information of communication carried out by said user;
a calculation step for calculating the communication charge carried out by said user by employing a meter-rate charge calculation method different from the standard charge, appropriately to the IP address of said communication party; and
a billing step for billing the communication charge calculated by said calculation step on said user.

22. A communication charge calculation method for calculating, when a user carries out communication with a communication party via a network, the charge appropriate to the communication carried out by said user, comprising:
a detection step for detecting an IP address of a communication party by analysing flow information of communication carried out by said user; and
a calculation step for controlling the discount rate of the communication charge with respect to the communication carried out by said user, in case the IP address of said communication party is an IP address registered in advance by said user.

23. A communication charge calculation method for calculating, when a user carries out communication with a communication party via a network, the charge appropriate to the communication carried out by said user, comprising:
a detection step for detecting an IP address of a communication party by analysing flow information of communication carried out by said user; and
a calculation step for calculating the communication charge of said user, employing the meter-rate charge calculation method different from the standard communication charge, in case the IP address of said communication party is an IP address registered in advance by said user.

24. A communication charge billing method for billing the charge appropriate to communication carried out by a user on said user when said user carries out communication with a communication party via a network, the method comprising:
a detection step for detecting an IP address of a communication party by analysing flow information of communication carried out by said user;
a calculation step for calculating the communication charge carried out by said user employing the meter-rate charge calculation method in which the communication charge applied is different from the standard charge, in case said communication party is determined to be a communication party registered in advance by said user, referring to said detected IP address, whereas calculating the communication charge carried out by said user employing the charge calculation method appropriate to said standard charge, in case said communication party is determined not to be a communication party registered in advance by said user, referring to said detected IP address; and
a billing step for billing the communication charge calculated by said calculation step on said user.

25. A communication charge calculation method for calculating, when a user carries out communication with a communication party via a network, the charge appropriate to the communication carried out by said user, comprising:
a detection step for detecting an IP address of a communication party by analysing flow information of communication carried out by said user; and
a calculation step for controlling the discount rate of the communication charge with respect to the communication carried out by said user, in case the IP address of said communication party is included in a group in which the IP address of said user is registered, in case the IP address of said communication party is an IP address registered in advance by said user.

26. A communication charge billing method for billing the charge appropriate to communication carried out by a user on said user when said user carries out communication with a communication party via a network, the method comprising:
a detection step for detecting an IP address of a communication party by analysing flow information of communication carried out by said user;
a calculation step for calculating the communication charge carried out by said user using the discount charge form different from the standard charge, in case said communication party is a communication party registered in a group of said user, referring to said detected IP address, whereas calculating the communication charge carried out by said user using the charge form as same as said standard charge, in case said communication party is a communication party not registered in group of said user, referring to said detected IP address; and
a billing step for billing the communication charge calculated by said calculation step on said user.

27. A communication charge calculation method for calculating, when a user carries out communication with a communication party via a network, the charge appropriate to the communication carried out by said user, comprising:
a detection step for detecting an IP address of a communication party by analysing flow information of communication carried out by said user; and
a calculation step for calculating the communication charge carried out by said user, using a first discount charge form and a second discount charge form different from the standard communication charge, in case said communication party is a communication party registered in advance by said user and said communication party is a communication party registered in a group of said user.

28. A communication charge billing method for billing the charge appropriate to communication carried out by a user on said user when said user carries out communication with a communication party via a network, the method comprising:
a detection step for detecting an IP address of a communication party by analysing flow information of communication carried out by said user; and
a calculation step for calculating the communication charge carried out by said user, using a first discount charge form and a second discount charge form different from the standard charge, in case said communication party is determined to be a communication party registered in advance by said user, and said communication party is a communication party registered in a group of said user, referring to said detected IP address,
whereas calculating the communication charge carried out by said user using the charge form as same as said standard charge, in case said communication party is determined not to be a communication party registered in advance by said user, and said communication party is not a communication party registered in a group of said user, referring to said detected IP address.
